# EUROPÄISCHE PATENTANMELDUNG

(11) **EP 1 247 707 A2**
(43) Veröffentlichungstag der Anmeldung: **09.10.2002**
(21) Anmeldenummer: 02003790.9
(22) Anmeldetag: 20.02.2002
(51) Int. Cl.: B60S 1/38

(54) **Wischblatt zum Reinigen von Scheiben, insbesondere von Kraftfahrzeugen**

(30) Priorität: 14.03.2001 DE 10112137
(71) Anmelder: ROBERT BOSCH GMBH, 70442 Stuttgart (DE)
(72) Erfinder: Bauer, Peter-Josef, 3300 Tienen (BE); Wils, Christian, 3582 Beringen (BE); Verelst, Hubert, 3300 Tienen (BE)

(57) **Zusammenfassung**

Es wird ein Wischblatt vorgeschlagen, dass zum Reinigen von sphärisch gekrümmten Scheiben (22) insbesondere von Kraftfahrzeugen dient. Das Wischblatt (10) hat eine langgestreckte, gummielastische, mit einer Wischlippe (24) an der Scheibe (22) anlegbaren Wischleiste (14), die an einem bandartig langgestreckten, federelastischen Tragelement (12) gehalten ist, welches zwei mit Abstand voneinander und parallel zueinander angeordnete Federschienen (40) hat, die jeweils zumindest mit Längsstreifen (50) in randoffene Längsnuten (42) der Wischleiste (14) greifen, wobei an den Nutwänden (52, 54, 56) der Wischleiste (14) Flächen (161, 162, 163) den Federschienen anliegen. Ein besonders geräuscharmer störungsfreier Wischbetrieb wird gewährleistet, wenn zwischen den Nutwänden (52, 54, 56) der Wischleiste (14) und Flächen der Federschienen (40 bzw. 140) Gleitmittel (60 bzw. 160) angeordnet sind.

## Beschreibung

### Stand der Technik

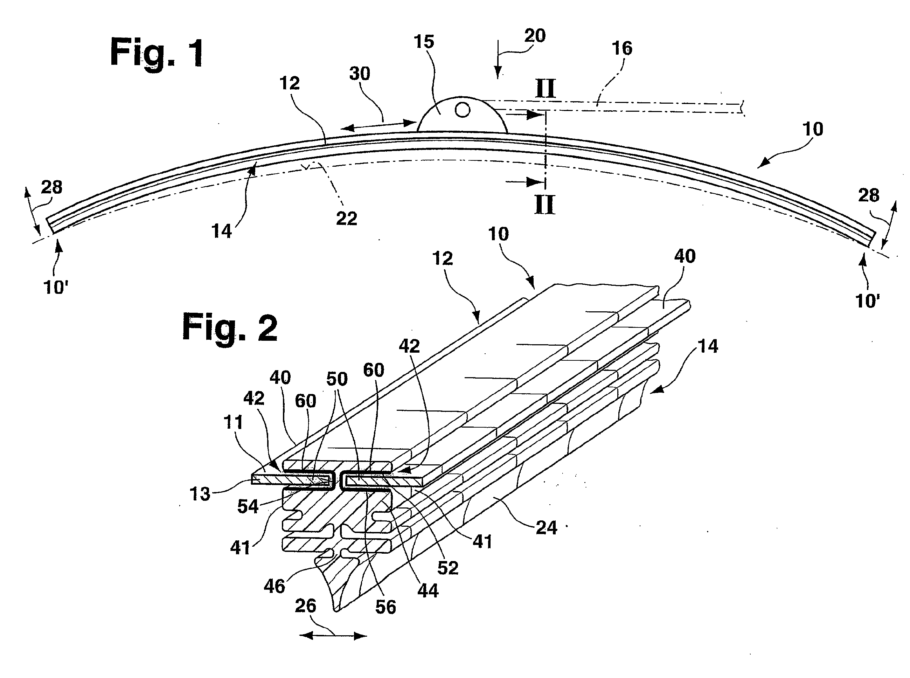

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende formgebende Krümmung des unbelasteten Tragelements - also wenn das Wischblatt 10 nur mit seinen beiden Enden 10 an der Scheibe anliegt (Figur 1) - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung, weil während des Wischbetriebs die Wischleiste, beziehungsweise deren an der Scheibe anliegende Wischlippe, stets mit einer bestimmten Kraft gegen die Scheibe drücken muss. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 257), weil das Tragelement neben der Verteilung des Anpreßdrucks auch die notwendige Querversteifung der gummielastischen Wischleiste notwendige Querversteifung der gummielastischen Wischleiste bewirkt. Bei dem bekannten Wischblatt wird nämlich die von einem Wischerarm auf einen Hauptbügel ausgeübte, zur Scheibe gerichtete Auflagekraft auf zwei Krallenbügel übertragen und von diesen über vier Krallen auf die gummielastische Wischleiste verteilt. Die beiden Federschienen dieses Wischblatts sorgen in erster Linie für eine Querversteifung der Wischleiste zwischen den Krallen, wenn das Wischblatt quer zu seiner Längserstreckung über die Scheibe verschoben wird.

Wenn ein bekanntes Wischblatts der im Oberbegriff des Anspruchs 1 bezeichneten Art (DE-OS 19907629) über die ungleichförmig sphärisch gekrümmte Scheibe verschoben wird und das Wischblatt dem Druck des Tragelements beziehungsweise der Oberfläche der Scheibe folgend aus einer seiner Strecklage angenäherten Betriebslage - im Mittelbereich der zu wischenden Scheibe - in seine maximal gekrümmte Betriebslage - in den Randbereichen der Scheibe - verformt wird, ergibt sich zwischen den Flächen der Federschienen des Tragelements und den an diesen anliegenden Nutwänden der Wischleiste eine Relativbewegung in deren Längsrichtung, welche zu Verspannungen im Wischblatt führt. Diese Verspannungen beeinträchtigen das Wischergebnis und führen darüber hinaus zu unerwünschten Quietschgeräuschen während des Wischbetriebs, weil durch den bezüglich der Federschienen ungünstigen Reibwert des für die Wischleiste notwendigen Materials eine diese Relativbewegung störende Bremswirkung an den Federschienen zustande kommt. Auch kann sich eine Versteifung der Wischleiste und damit eine Beeinträchtigung des Wischergebnisses ergeben, wenn in die Längsnuten eintretendes Wasser gefriert.

### Vorteile der Erfindung

Bei dem erfindungsgemäßen Wischblatt mit den kennzeichnenden Merkmalen des Anspruchs 1 wird diese Bremswirkung zumindest sehr stark reduziert, so dass eine störungsfreie Relativbewegung zwischen den Federschienen und der Wischleiste möglich ist. Die Verspannungen in der Wischleiste werden damit praktisch abgestellt, so dass ein zufriedenstellender und geräuschloser Wischbetrieb möglich ist. Auch wird einer dauerhaften Vereisung der Wischleiste vorgebeugt, weil eine dort vorhandene Eisschicht am Gleitmittel keinen Halt findet und rasch aus den Längsnuten herausgearbeitet wird.

Bei einer zweckmäßigen Ausgestaltung des Wischblatts greifen die Federschienen zumindest mit einander benachbarten Längsstreifen in zu den einander gegenüberliegenden Längsseiten der Wischleiste hin randoffene Längsnuten der Wischleiste.

Im Hinblick auf eine kostengünstige Fertigung des erfindungsgemäßen Wischblatts kann es von Vorteil sein, wenn das Gleitmittel an den Federschienen des Tragelements angeordnet ist. Bei bestimmten Anwendungsfällen kann es jedoch auch zweckmäßig das Gleitmittel an den Nutwänden der Wischleiste anzuordnen.

Um den mit dem Gleitmittel erreichten Vorteil über einen großen Zeitraum hin festzuhalten ist das Gleitmittel mit den Federschienen des Tragelements beziehungsweise mit den Nutwänden der Wischleiste fest verbunden.

Dabei kann es für die Herstellung und Montage des Wischblatts von Vorteil sein, wenn das Gleitmittel als fest mit seinem Träger verbundene Belagschicht ausgebildet ist.

Bei besonders problematischen Anwendungsfällen hat es sich als zweckmäßig erwiesen, wenn an den Nutwänden der Wischleiste ein anderes Gleitmittel als an den Federschienen angeordnet ist. Dabei werden die verwendeten Gleitmittel im Hinblick auf eine besonders vorteilhafte Gleitpartnerschaft ausgewählt.

Weitere vorteilhafte Weiterbildung und Ausgestaltungen der Erfindung sind in der nachfolgenden Beschreibung von in der dazugehörigen Zeichnung dargestellten Ausführungsbeispielen angegeben.

### Zeichnung

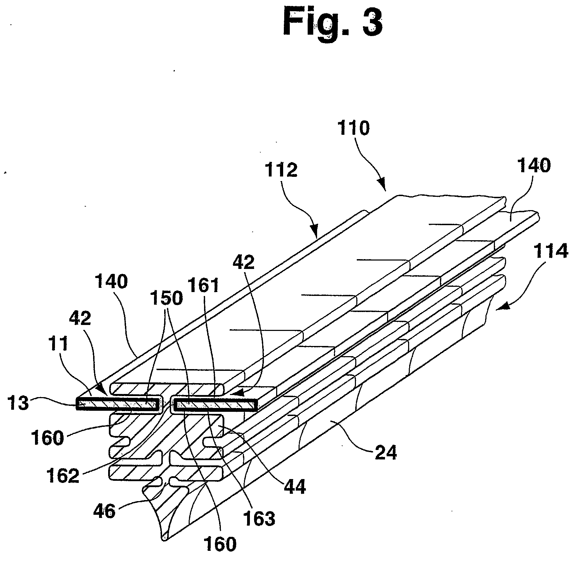

In der Zeichnung zeigen: Figur 1 die Prinzipdarstellung eines erfindungsgemäßen Wischblatts in Seitenansicht, Figur 2 einen Schnitt durch das Wischblatt gemäß Figur 1 entlang der Linie II-II, in perspektivischer, gestreckter und vergrößerter Darstellung und Figur 3 die Anordnung gemäß Figur 2 einer anderen Ausführungsform der Erfindung.

### Beschreibung der Ausführungsbeispiele

Ein in Figur 1 dargestelltes Wischblatt 10 für Wischvorrichtungen, insbesondere für Scheiben von Kraftfahrzeugen, weist ein bandartig langgestrecktes, federelastisches Tragelement 12 auf, an dessen unterer, der Scheibe zugewandten Seite 13 eine langgestreckte, gummielastische Wischleiste 14 längsachsenparellel befestigt ist (Figur 2). An der Oberseite 11 des Tragelements 12 ist in dessen Mittelabschnitt das wischblattseitige Teil 15 einer Anschlussvorrichtung angeordnet, mit deren Hilfe das Wischblatt 10 gelenkig mit einem strichpunktiert gezeigten, angetriebenen Wischerarm 16 lösbar verbunden werden kann (Figur 1). Dazu ist der Wischerarm 16 an seinem freien Ende mit einem nicht im Detail gezeigten, wischerarmseitigen Teil der Anschlussvorrichtung versehen. Das Wischblatt 16 ist in Richtung des Pfeiles 20 zur zu wischenden Scheibe - beispielsweise die Windschutzscheibe eines Kraftfahrzeuges - belastet, deren Oberfläche in Figur 1 durch eine strichpunktiert dargestellte Linie 22 angedeutet ist. Da die Linie 22 die stärkste Krümmung der Scheibenoberfläche darstellen soll ist klar ersichtlich, dass die formgebende Krümmung des mit seinen beiden Enden 10 an der Scheibe anliegenden, noch unbelasteten Wischblatts 10 stärker ist als die maximale Scheibenkrümmung (Figur 1). Unter dem Anpressdruck (Pfeil 20) legt sich das Wischblatt 10 mit seiner Wischlippe 24 über seine gesamte Länge an der zu wischenden, ungleichmäßig sphärisch gekrümmten Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 24 über deren gesamte Länge an der Scheibe 22 sowie für eine gleichmäßige Verteilung des Anspressdrucks (Pfeil 20) sorgt. Weil die sphärisch gekrümmte Scheibe nicht den Abschnitt einer Kugeloberfläche darstellt, muss sich das Wischblatt 10 gegenüber dem Wischerarm 16 während seiner quer zur Längserstreckung erfolgenden, hin und her gehenden Wischbewegung (Doppelpfeil 26 in Figur 2) ständig dem jeweiligen Verlauf der Scheibenoberfläche anpassen können. Deshalb ist die Anschlussvorrichtung gleichzeitig als Gelenkverbindung zwischen Wischblatt und Wischerarm ausgebildet. Darüber hinaus muss sich das Wischblatt 10 beziehungsweise die Wischleiste 14 mit ihrer Wischlippe 24 auch dem sich während des Wischbetriebs stetig ändernden Verlauf der Scheibenkrümmung anpassen, was durch die beiden Doppelpfeile 28 in Figur 1 angedeutet ist. Diese Schwingbewegung 28 erstreckt sich von den Enden 10 des Wischblatts 10 beziehungsweise des Tragelements 12 aus - stetig geringer werdend - zum wischblattseitigen Teil 15 der Anschlussvorrichtung. Dabei ergibt sich zwangsläufig eine Relativbewegung zwischen dem Tragelement 12 und der Wischleiste 14, in deren Längsrichtung, welche in Figur 1 durch den Doppelpfeil 30 symbolisiert ist.

Aus Figur 2 ist ersichtlich, dass das aus einem federelastischen Stahl gefertigte Tragelement 12 des Wischblatts 10 zwei mit Abstand voneinander und parallel zueinander verlaufende Federschienen 40 umfasst. Die Wischleiste 14 hat eine im Querschnitt gesehen im wesentlichen quadratische Basisleiste 44, mit der über eine schmale Kippleiste 46 die die eigentliche Wischarbeit übernehmende, leistenartige Wischlippe 24 verbunden ist. Die Basisleiste 44 ist an ihren beiden einander gegenüberliegenden Außen- oder Längsseiten 41 mit jeweils einer randoffenen Längsnut 42 versehen. In jeder der beiden Längsnuten 42 ist eine der beiden Federschienen 40 des Trageelements 12 untergebracht. Dabei tauchen die beiden Federschienen 40 mit einander benachbarten Längsstreifen 50 in die Längsnuten 42 ein, so dass an den Nutwänden Flächen der Federschienen anliegen. Die beiden zum Tragelement 12 gehörenden Federschienen 40 sind somit mit Abstand voneinander und parallel zueinander in einer gemeinsamen Ebene angeordnet. Die Sicherung der beiden Federschienen 40 in ihren Längsnuten 42 kann beispielsweise durch das Teil 15 der Anschlussvorrichtung und/oder durch in der Zeichnung nicht dargestellte, beispielsweise mit den Federschienen verrastbare Sicherungsmittel übernommen werden, so dass die Wischleiste 14 zuverlässig am Trageelement 12 gehalten ist. Für die Erfindung ist es unerheblich, wenn an der von der Wischlippe 24 abgewandten Seite der Basisleiste 44 eine spoilerartige Windabweisleiste angeordnet ist.

Bei einer ersten Ausführungsform der Erfindung (Figur 2) ist an den Wänden 52, 54, 56 der Längsnuten 42 ein Gleitmittel 60 angeordnet. Das Gleitmittel 60 ist in Figur 2 durch eine Verdickung der die Nutwände 52, 54, 56 darstellenden Linien angedeutet.

Bei einer anderen, in Figur 3 dargestellten Ausführungsform der Erfindung hat das Wischblatt 110 einen Aufbau, der mit dem Aufbau des Wischblatts gemäß Figur 2 vergleichbar ist. Deshalb sind in Figur 3 die den grundsätzlichen Aufbau des Wischblatts ergebenden Teile der Wischleiste 114 mit denselben Bezugszahlen versehen worden wie dies in Figur 2 der Fall ist. So hat auch hier die Wischleiste 14 eine Basisleiste 44, welche über eine Kippleiste 46 mit einer leistenartigen Wischlippe 24 verbunden ist. Weiter ist die Basisleiste 44 an ihren einander gegenüberliegenden Außenseiten mit jeweils einer zur Längsseite hin randoffenen Längsnut 42 versehen, wobei in jede der beiden Längsnuten jeweils eine zu dem Tragelement 112 gehörende Federschiene 140 miteinander benachbarten Längsstreifen 150 eintaucht. Abweichend von dem zuvor anhand der Figur 2 beschriebenen Ausführungsbeispiel sind beim Ausführungsbeispiel gemäß Figur 3 nicht die Wände der Längsnuten 42 mit einem Gleitmittel versehen. Vielmehr ist hier das Gleitmittel 160 an den Flächen 161, 162, 163 der Federschienen 140 des Tragelements 112 angeordnet. Das Gleitmittel 160 deckt hier zumindest die in die Längsnuten 42 eintauchenden Wandbereiche der Federschienen 140 ab.

Es versteht sich von selbst, dass die beiden anhand der Figuren 2 und 3 dargestellten Ausführungsformen der Erfindung auch in Kombination benutzt werden können. Somit ist es möglich, dass an den Nutwänden 50, 54, 56 der Wischleiste 14 ein Gleitmittel 60 verwendet werden kann, das sich von dem an den Flächen 161, 162, 163 der Federschienen 140 angeordneten Gleitmittel 160 hinsichtlich seiner Gleiteigenschaften unterscheidet. Dadurch ist es möglich, die einander zugewandten Nutwände 52, 54, 56 und Flächen 161, 162, 163 der Federschienen mit Rücksicht auf die während des Betriebs auftretende Gleitreibung mit besonders geeigneten Gleitpartnern zu versehen. Bei der Ausübung des Erfindungsgedankens kann es von Vorteil sein, wenn das Gleitmittel 60 beziehungsweise 160 fest mit den Nutwänden 52, 54, 56 beziehungsweise fest mit den diesen Nutwänden zugewandten Flächen 161, 162, 163 der Federschienen 140 verbunden ist. Dies kann in beiden Fällen beispielsweise dadurch erreicht werden, dass das Gleitmittel als Belagschicht ausgebildet ist.

Die Anordnung des Gleitmittels in der vorbeschriebenen Weise führt zu einer Glättung der einander zugewandten Oberflächen, so dass die Federschienen während der Wischarbeit stark reibungsvermindert und damit geräuscharm in den Nuten gleiten. Als Gleitmittel eignen sich besonders Festschmierstoffe, Gleitlacke, Öle, PTFE, Silikonspray, Moliden-Disulfid, Graphit auch in Pulverform und so weiter. Das Aufbringen des Gleitmittels selbst kann an den vorbestimmten Bereichen der Nutwände und/oder an den diesen zugewandten Flächen der Federschienen durch Tauchen, Spritzen oder Streichen erreicht werden.

Alle Ausführungsbeispielen ist gemeinsam, dass zwischen den Nutwänden 52, 54, 56 der Wischleiste 14 bzw. 114 und den diesen zugewandten Flächen 161, 162, 163 der Federschienen 40 bzw. 140 Gleitmittel 60 bzw. 160 angeordnet sind. Dabei ist es auch denkbar, die Federschienen in rundum geschlossenen Längskanälen der Wischleiste unterzubringen. In einem solchen Fall sollten dann alle Kanalwände und/oder alle Flächen der Federschienen mit einem Gleitmittel versehen sein.

Das Gleitmittel ist bei den Ausführungsbeispielen stets als Teil der Wischleiste bzw. als Teil des Tragelements bzw. dessen Federschienen zu betrachten. Jedoch kann der durch das Gleitmittel erreichbare Vorteil auch durch ein separates Teil, beispielsweise durch eine beigelegte Gleitfolie erlangt werden.

## Patentansprüche

1. Wischblatt (10) zum Reinigen von Scheiben, insbesondere von sphärisch gekrümmten Scheiben von Kraftfahrzeugen, mit einer langgestreckten, gummielastischen, mit einer Wischlippe (48) an der Scheibe (22) anlegbaren Wischleiste (14), die an einem bandartig langgestreckten, federelastischen Tragelement (12) gehalten ist, das zwei mit Abstand voneinander und parallel zueinander angeordnete Federschienen (40 bzw. 140) hat, welche jeweils zumindest mit Längsstreifen (50 bzw. 150) in vorzugsweise randoffene Längsnuten (42) der Wischleiste (14 bzw. 114) greifen, wobei an den Nutwänden (52, 54, 56) der Wischleiste (14) Flächen (161, 162, 163) der Federschienen (40 bzw. 140) anliegen, **dadurch gekennzeichnet, dass** zwischen Nutwänden der Wischleiste (14 bzw. 114) und Flächen der Federschienen (40 bzw. 140) ein Gleitmittel (60 bzw. 160) angeordnet ist.

2. Wischblatt nach Anspruch 1 **dadurch gekennzeichnet, dass** die Federschienen (40 bzw. 140) mit einander benachbarten Längsstreifen (50 bzw. 150) in zu den einander gegenüberliegenden Längsseiten (41) der Wischleiste (14 bzw. 114) hin randoffene Längsnuten (42) greifen.

3. Wischblatt nach einem der Ansprüche 1 oder 2, **dadurch gekennzeichnet, dass** das Gleitmittel (160) an den Federschienen (140) des Tragelements (112) angeordnet ist.

4. Wischblatt nach einem der Ansprüche 1 oder 2 **dadurch gekennzeichnet, dass** das Gleitmittel (60) an den Nutwänden (52, 54, 56) der Wischleiste (14) angeordnet ist.

5. Wischblatt nach Anspruch 3, **dadurch gekennzeichnet, dass** das Gleitmittel (160) mit den Federschienen (140) des Tragelements (112) fest verbunden ist.

6. Wischblatt nach Anspruch 4, **dadurch gekennzeichnet, dass** das Gleitmittel (60) mit den Nutwänden (52, 54, 56) der Wischleiste (14) fest verbunden ist.

7. Wischblatt nach einem der Ansprüche 5 oder 6, **dadurch gekennzeichnet, dass** das Gleitmittel (60 bzw. 160) als Belagschicht ausgebildet ist.

8. Wischblatt nach einem der Ansprüche 3 bis 7, **dadurch gekennzeichnet, dass** an den Nutwänden (52, 54, 56) der Wischleiste (14) ein anderes Gleitmittel als an den Flächen (161, 162, 163) Federschienen (140) angeordnet ist.
